# EUROPÄISCHE PATENTSCHRIFT

(11) **EP 3 630 361 B1**
(45) Veröffentlichungstag und Bekanntmachung des Hinweises auf die Patenterteilung: **24.02.2021**
(21) Anmeldenummer: 18717526.0
(22) Anmeldetag: 16.03.2018
(51) Int. Cl.: B02C 21/02, B02C 23/02, B02C 23/08

(54) **AUFBEREITUNGSANLAGE**
PROCESSING SYSTEM
INSTALLATION DE TRAITEMENT

(30) Priorität: 01.06.2017 DE 102017112091
(43) Veröffentlichungstag der Anmeldung: 08.04.2020
(73) Patentinhaber: Kleemann GmbH, 73037 Göppingen (DE)
(72) Erfinder: WELLER, Christian, 73732 Esslingen (DE); SCHMID, Wolfgang, 73098 Rechberghausen (DE); BLESSING, Otto, 73566 Bartholomä (DE)
(74) Vertreter: Herrmann, Jochen
(86) Internationale Anmeldenummer: PCT/EP2018/056699
(87) Internationale Veröffentlichungsnummer: WO 2018/219513

(56) Entgegenhaltungen:
- EP-A1- 2 767 340
- CA-A- 1 042 404
- US-A- 3 016 203
- US-A- 3 409 235

## Beschreibung

Die Erfindung betrifft eine Aufbereitungsanlage, insbesondere eine Brechanlage, insbesondere einen Gesteinsbrecher, für Natursteinaufbereitung sowie für das Recycling von Abbruchmaterialien, mit einer Befülleinheit, die mit dem zu brechenden Gut befüllbar ist, wobei in Förderrichtung hinter der Befülleinheit eine Siebeinheit angeordnet ist, wobei die Siebeinheit mittels eines Schwingungserregers in Schwingbewegung versetzbar ist, und wobei über die Siebeinheit ein Teil des zugeführten Guts einem Brechaggregat zugeführt und ein weiterer Teil in der Siebeinheit ausgesiebt wird, wobei der ausgesiebte Teil des Guts mittels einer verstellbaren Klappe einer Fördereinheit wahlweise in einer Bypassstellung am Brechaggregat vorbei einem Brecherabzugsförderer zugeleitet ist oder in einer Förderposition mittels einer Fördereinrichtung aus dem Maschinen-Arbeitsbereich ausgefördert wird.

Solche Brechanlagen dienen zum Zerkleinern von Gesteinsmaterial und werden entweder als mobile oder als stationäre Anlagen eingesetzt. Über die Befülleinheit wird das zu brechende Gut in die Anlage eingefüllt. Hierzu werden üblicherweise Bagger eingesetzt. Ausgehend von der Befülleinheit wird das zu zerkleinernde Material mit einer Fördereinrichtung zu der Siebeinheit gefördert. Die Siebeinheit kann dabei verschiedene Bauformen aufweisen. Es sind Bauformen bekannt, bei denen die Siebeinheit eine einfache Förderrinne bildet, die mit Durchbrüchen versehen ist, um eine Siebwirkung zu erreichen (Rostrinne). Weiterhin sind im Stand der Technik Bauweisen vorbekannt, bei denen ein Siebdeck als Kreis- oder Ellipsenschwinger verwendet ist. Dabei sind unterhalb einer Förderrinne ein oder mehrere zusätzliche Siebe eingebaut. Das Gesteinsmaterial wird über eine Fördereinrichtung einem Brechaggregat zugeleitet. Beispielsweise kann das Brechaggregat ein Backenbrecher sein. Beim Transport über die vorgeschaltete Einheit (Rostrinne oder Sieb) wird ein Teil des zugeleiteten Guts ausgesiebt, diese ausgesiebte Fraktion wird am Brechaggregat in dem Bypass vorbeigeleitet, sodass sie den Brecher nicht belastet. Es ist nun möglich die ausgesiebte Teil-Fraktion entweder über das Brecherabzugsband abzufördern oder es besteht die Möglichkeit sie über eine separate Fördereinrichtung aus dem Arbeitsbereich der Maschine zu transportieren. Hierzu werden üblicherweise Seitenbänder verwendet. Der Anwender hat nun die Möglichkeit zu wählen, ob er die eine oder die andere Betriebsweise fahren möchte. Hierzu muss er die verstellbare Klappe der Fördereinrichtung entweder auf die Bypassstellung oder die Förderposition einstellen.

Während des Betriebseinsatzes kommt es häufig vor, dass sich die abgesiebte feine Teilfraktion auf der Oberfläche der Klappe festsetzt und diese zunehmend verblockt. Dies hat dann zur Folge, dass das abgesiebte Material nicht mehr in der gewünschten Weise abgeführt wird, sondern sich unkontrolliert in der Maschine verteilt.

CA 1042404 offenbart eine Gesteins-Brechanlage mit einer Aufgabeeinheit. Im Bereich dieser Aufgabeeinheit sind mehrere Siebdecks übereinander angeordnet. Über die Siebdecks können Gesteinsfraktionen mit unterschiedlicher Korngröße ausgesiebt werden. Einige der ausgesiebten Fraktionen können einem Brecher zugeleiteten werden. Feinere Gesteinsfraktionen werden im Bypass an dem Brecher vorbeigeleitet und auf ein Brecher-Abzugband gefördert. Eine ähnlich arbeitende Anordnung ist auch aus US 3,409,235 bekannt.

US 3,016,203 offenbart eine Siebanlage. Dabei sind mehrere übereinander angeordnete Siebdecks verwendet, die über Schwingungsantriebe angeregt werden, um Vibrationsbewegungen durchzuführen zu können.

EP 2 767 340 A1 beschreibt einen mobilen Gesteinsbrecher der zusätzlich zu einer Brecheneinheit mit einer Siebanlage ausgestattet ist.

Es ist daher Aufgabe der Erfindung, eine Brechanlage der eingangs erwähnten Art bereitzustellen, die sich durch eine verbesserte Betriebssicherheit auszeichnet.

Diese Aufgabe wird dadurch gelöst, dass die Klappe an der Siebeinheit derart befestigt ist, dass sie gemeinsam mit der Siebeinheit von dem Schwingungserreger angeregt wird.

Während des Betriebseinsatzes schwingt mithin die Klappe gemeinsam mit der Siebeinheit, wodurch ein Festsetzen des feinen Siebguts auf der Oberfläche der Klappe verhindert ist. Mit dieser einfachen Maßnahme wird mithin die Betriebssicherheit garantiert und ein unkontrolliertes Verteilen von Material in der Maschine wirkungsvoll verhindert. Insbesondere wird garantiert, dass sowohl in der Bypassposition als auch in der Förderstellung die Funktionalität der Klappe aufrechterhalten wird.

Gemäß einer bevorzugten Ausgestaltungsvariante der Erfindung kann es vorgesehen sein, dass die verstellbare Fördereinheit zwei zueinander beabstandete Befestigungsabschnitte aufweist, zwischen denen die Klappe schwenkbar gehalten ist, wobei die Befestigungsabschnitte an der Siebeinheit befestigt sind. Hierdurch wird eine sichere und dauerhafte Fixierung der Klappe an der schwingenden Siebeinheit ermöglicht. Hierbei kann es zur Verringerung des konstruktiven Aufwandes insbesondere vorgesehen sein, dass die Befestigungsabschnitte an gegenüberliegenden Seitenwänden der Siebeinheit befestigt sind. Bevorzugt sind die Befestigungsabschnitte der Fördereinheit mittels Flanschabschnitten, die einerseits an den gegenüberliegenden Seitenwänden der Siebeinheit und andererseits an den Befestigungsabschnitten ausgebildet sind, an der Siebeinheit befestigt. Das Anflanschen der Fördereinheit erlaubt eine besonders schnelle und einfache Befestigung der Fördereinheit an der Siebeinheit. Dazu werden einfach die Flanschabschnitte relativ zueinander zur Anlage gebracht und aneinander befestigt. Zur Befestigung der Flanschabschnitte aneinander können beliebige lösbare Befestigungsmittel, bspw. Schrauben und Muttern, verwendet werden. Die an die Siebeinheit angeflanschte Fördereinheit kann zudem besonders schnell und einfach ausgewechselt werden.

Eine denkbare Erfindungsalternative ist dergestalt, dass die Befestigungsabschnitte Lageraufnahmen aufweisen, an denen die Klappe mit Lagerabschnitten gelagert ist, und dass die Lagerabschnitte an einem Profilabschnitt angekoppelt sind, der unterhalb der Klappe verläuft und mit dieser verbunden ist. Der Profilabschnitt definiert eine eindeutige Schwenkachse und sichert die lagegenaue Positionierung und Zuordnung der beidseitig an der Klappe angeordneten Lagerabschnitte.

Eine bevorzugte Erfindungsausgestaltung ist dergestalt, dass die Klappe einen Mittenbereich aufweist, an den sich seitlich quer zur Fördereinrichtung beidseitig Abwinklungen anschließen, und dass die Siebeinheit eine Förderrinne aufweist, die von einem biegeschlaffen Bauteil, beispielsweise einem Gummiband, gebildet ist, an das die Klappe mit ihrer Unterseite in der Bypassposition angelegt ist. Mit dem biegeschlaffen Bauteil kann die Förderrinne auf einfachste Weise in wannenartiger Form geformt werden. Diese Förderrinne sammelt das zu transportierende Gut in der Mitte der Förderrinne und leitet es der Klappe zu. Die Klappe bildet mit ihrem Mittenbereich und ihren seitlich angeschlossenen Abwinklungen die rinnenförmige Geometrie des biegeschlaffen Bauteils annähernd nach und sorgt so für eine eindeutige Ableitung des abgesiebten Materials. Dadurch dass sich die Klappe in der Bypassposition unterseitig an die Förderrinne anlegt, ergibt sich im Übergangsbereich zwischen der Förderrinne und der Klappe in Förderrichtung eine absteigende Stufe, sodass dem Transportweg kein Widerstand entgegengestellt ist. Ein Festsetzen und Verblocken von Material ist hierdurch auf einfachste Weise verhindert.

Wenn vorgesehen ist, dass die Klappe mittels einer Tragstruktur unterfangen ist, die von Längsstreben und Querstreben gebildet ist, so ergibt sich eine leichte und stabile Bauweise.

Eine besonders bevorzugte Erfindungsausgestaltung sieht vor, dass die verstellbare Fördereinrichtung in Förderrichtung hinter der Klappe ein Förderelement aufweist, das in der Bypassstellung der Klappe an den Förderbereich der Klappe anschließt. Hierdurch wird eine platzsparende Bauweise verwirklicht. In der Bypassposition kann über die Kombination der Klappe mit dem Förderelement ein ausreichend großer Transportabstand überbrückt werden. Die Verstellung der Klappe von der Bypassposition in die Förderstellung benötigt nur einen kleinen Schwenkraum. Wenn bei dieser Konstruktion zudem vorgesehen ist, dass das Förderelement an der Siebeinheit derart befestigt ist, dass es gemeinsam mit der Siebeinheit und der Klappe von dem Schwingungserreger angeregt wird, dann wird nicht nur die Klappe, sondern auch das Förderelement sicher vor Verblockung mit ausgesiebtem Material geschützt. Hierbei kann es zur Verringerung des Teile- und Montageaufwands auch vorgesehen sein, dass das Förderelement an den beiden Befestigungsabschnitten befestigt ist und diese zueinander beabstandet hält.

Eine erfindungsgemäße Brechanlage kann auch derart sein, dass das Förderelement einen Förderabschnitt aufweist, der aus einem Blechabschnitt gefertigt ist und der an seiner Unterseite mittels einer Tragstruktur, die eine oder mehrere Stützstreben umfasst, unterfangen ist. Auch durch diese Maßnahme wird eine stabile Leichtbauweise erreicht.

Es ist denkbar, bei der Klappe und/oder dem Förderelement einen Materialabschnitt aus einem biegeschlaffen Material, bspw. Gummi oder Kunststoff, auf den Blechabschnitt aufzubringen. Der Materialabschnitt kann an quer zur Förderrichtung verlaufenden Seiten nach Art einer Trommelbespannung eingespannt sein. Alternativ ist es auch denkbar, bei der Klappe und/oder dem Förderelement auf den Blechabschnitt zu verzichten, so dass der Materialabschnitt aus dem biegeschlaffen Material unmittelbar von der darunter angeordneten Tragstruktur unterfangen ist. Der Materialabschnitt aus dem biegeschlaffen Material kann besonders gut in Schwingungen bzw. Vibrationen versetzt werden, sodass eine Verblockung mit ausgesiebtem Material wirksam verhindert ist. Dies gilt insbesondere dann, wenn der Materialabschnitt lediglich an den Seiten eingespannt ist.

Um die Klappe an der schwingenden Siebeinheit sicher in der jeweiligen Einstellposition halten zu können, kann es vorgesehen sein, dass an die Klappe ein oder mehrere Arretierabschnitte mit wenigstens einer Arretieraufnahme angekoppelt sind, die in der Bypassstellung und/oder der Förderposition an ortsfesten Befestigungselementen festlegbar sind.

Die Erfindung wird im Folgenden anhand von einem, in den Zeichnungen dargestellten Ausführungsbeispielen näher erläutert. Es zeigen:
- Figur 1: in schematischer Prinzipdarstellung eine mobile Brechanlage in Seitenansicht,
- Figur 2: eine Siebeinheit einer Brechanlage in Seitenansicht und im Schnitt,
- Figur 3: die Darstellung gemäß Figur 2 in einer veränderten Betriebsstellung,
- Figur 4: eine verstellbare Fördereinheit in perspektivischer Ansicht von unten,
- Figur 5: die verstellbare Fördereinheit gemäß Figur 4 in perspektivischer Seitenansicht,
- Figur 6: die Darstellung gemäß Figur 5, jedoch in einer veränderten Betriebsposition,
- Figur 7: die verstellbare Fördereinheit gemäß den Figuren 4 bis 6 in Explosionsdarstellung,
- Figur 8: einen Längsschnitt durch eine alternative Ausführungsform einer verstellbaren Fördereinheit, und
- Figur 9: eine perspektivische Ansicht von unten auf eine alternative Ausführungsform einer verstellbaren Fördereinheit.

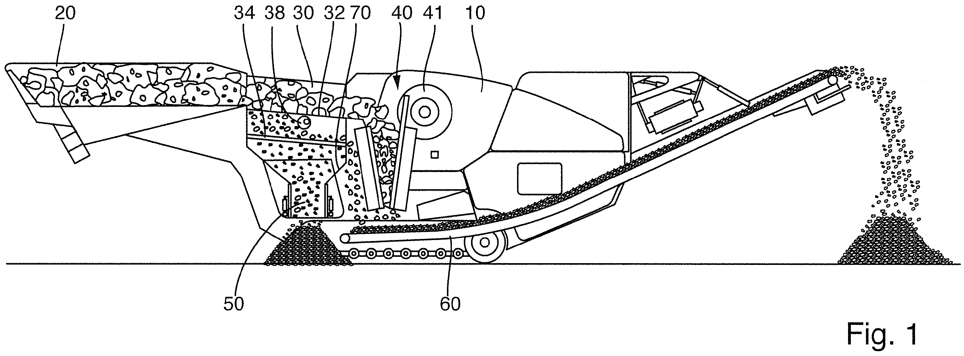

Figur 1 zeigt eine mobile Brechanlage 10, wie sie typischerweise zur Zerkleinerung von Gesteinsmaterial oder sonstigem mineralischen Material eingesetzt wird. Diese mobile Brechanlage 10 weist ein Maschinenchassis auf, das von zwei als Kettenlaufwerken ausgebildeten Fahrwerken getragen ist.

Die Brechanlage 10 ist mit einer Befülleinheit 20 ausgerüstet, die üblicherweise als trichterförmige Aufgabeeinheit ausgeführt ist. Über diese Befülleinheit 20 kann die Brechanlage 10 mit dem zu zerkleinernden Gut befüllt werden. Die Befülleinheit 20 weist bodenseitig eine Transporteinrichtung, insbesondere eine Rostrinne oder, wie vorliegend ein Förderband auf. Über diese Fördereinrichtung wird das zu zerkleinernde Gut einer Siebeinheit 30 zugefördert. Der Siebeinheit 30 ist ein Schwingungserreger 38 zugeordnet, der als Exzenter-Antrieb ausgeführt sein kann. Mit diesem Schwingungserreger 38 lässt sich die Siebeinheit 30 in Schwingung versetzen, um das geförderte Gut einem Siebprozess zu unterziehen. Der Schwingungserreger 38 versetzt die Siebeinheit 30 nicht nur zu Siebzwecken in Schwingung, sondern es wird in Verbindung mit der geneigten Anordnung der einzelnen Siebdecks auch eine Transportwirkung, wie bei einem Vibrationsförderer, erreicht.

Wie Figur 1 erkennen lässt, wird die grobe Gesteinsfraktion, welche nicht ausgesiebt wird, von der Siebeinheit 30 einem Brechaggregat 40 zugefördert. Das Brechaggregat 40 ist vorliegend in Form eines Backenbrechers ausgeführt. Dieses Brechaggregat 40 weist zwei Brechbacken auf, die einen konvergierenden Spalt bilden. In diesen Spaltbereich hinein wird das zu zerkleinernde Gut gefördert. Das Brechaggregat 40 besitzt eine feststehende Brechbacke und eine bewegliche Brecherbacke. Die bewegliche Brecherbacke wird von einem Exzenterantrieb 41 angetrieben. Wie Figur 1 erkennen lässt, wird das grobe Gesteinsmaterial im konvergierenden Spalt gebrochen. Bodenseitig verlässt das gebrochene und zerkleinerte Gesteinsmaterial das Brechaggregat 40 und fällt schwerkraftbedingt auf einen Brecherabzugsförderer 60. Der Brecherabzugsförderer 60 ist vorliegend als endlos umlaufendes Transportband ausgebildet. Über den Brecherabzugsförderer 60 wird das zerkleinerte Gesteinsmaterial abgeleitet und neben der Brechanlage 10 aufgehäuft. Wie die Zeichnung erkennen lässt, wird das von der Befülleinheit 20 kommende Gut in der Siebeinheit 30 über ein Sieb 32 (z.B. Obersiebdeck) geleitet.

Dabei wird ein Teil des Gesteinsmaterials ausgesiebt. Es handelt sich dabei um Gesteinsteile, welche aufgrund ihrer Größe nicht durch das Brechaggregat 40 geschickt werden müssen, da sie bereits eine Größe aufweisen, die in etwa der Gesteinsgröße entspricht, welche von dem Brechaggregat 40 gebrochen wird. Wie die Zeichnung erkennen lässt, wird ein Teil dieser ausgesiebten Gesteinsfraktion unmittelbar auf den Brecherabzugsförderer 60 aufgegeben und zwar im Bypass vorbei an dem Brechaggregat 40. Unterhalb des Siebs 32 ist nun ein weiteres Siebdeck 34 in der Siebeinheit 30 vorhanden. Dieses Siebdeck 34 siebt aus dem bereits ausgesiebten Material eine weitere, feine Teilfraktion aus. Es ist nun teilweise gewünscht, diese besonders feine Teilfraktion zu separieren, wozu ein Abführband 50 Verwendung findet. Auf dieses endlos umlaufende Abführband 50 wird die feine Teilfraktion aufgegeben, aus dem Arbeitsbereich der Brechanlage 10 heraus gefördert und angehäuft, wie dies Figur 1 erkennen lässt. Nun ist es so, dass nicht immer ein Ausfördern der feinen Teilfraktion gewünscht ist. Vielmehr möchte der Maschinenführer die Wahl haben, ob er sie separiert oder gemeinsam mit dem gröberen ausgesiebten Material direkt auf den Brecherabzugsförderer 60 aufgeben möchte. Zu diesem Zweck ist eine verstellbare Fördereinheit 70 verwendet.

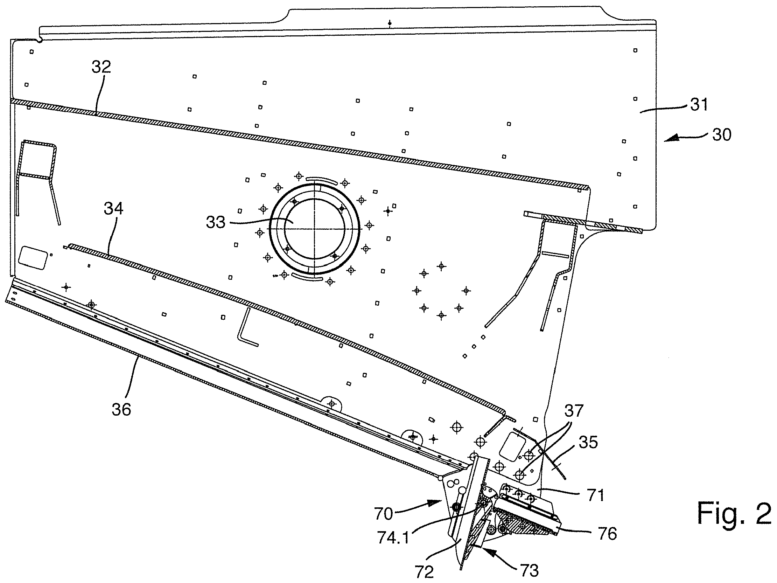

Die Konstruktion, Anordnung und Funktionsweise der Fördereinheit 70 wird nachfolgend näher beschrieben. Wie Figur 2 erkennen lässt, weist die Siebeinheit 30 zwei Seitenwände 31 auf, die zueinander beabstandet angeordnet sind. Zwischen den beiden Seitenwänden 31 wird der Förderbereich für das Gesteinsmaterial gebildet. Die Darstellung lässt erkennen, dass zumindest eine der Seitenwände 31 eine Aufnahme 33 für den Schwingungserreger 38 aufweist. Damit kann die Schwingungsenergie des Schwingungserregers 38 in die Seitenwand 31 eingebracht werden. Denkbar ist auch eine abweichende Anordnung des Schwingungserregers 38, wobei jedoch vorgesehen sein soll, dass die Schwingungsenergie vom Schwingungserreger 38 in die Siebeinheit 30 eingebracht wird, damit die Siebeinheit 30 mit der Frequenz und Amplitude des Schwingungserregers 38 schwingt. Zwischen den beiden Seitenwänden 31 ist im oberen Bereich der Siebeinheit 30 das Sieb 32 gehalten. Unterhalb des Siebs 32 ist das Siebdeck 34 angeordnet. Zwischen dem Sieb 32 und dem Siebdeck 34 ergibt sich ein Förderbereich. Oberhalb des Siebs 32 wird mittels der beiden Seitenwände und dem Sieb 32 ein Förderbereich begrenzt. Unterhalb des Siebdecks 34 ergibt sich ein weiterer Förderbereich. Dieser Förderbereich wird bodenseitig durch eine Förderrinne 36 begrenzt. Die Förderrinne 36 kann als biegeschlaffes Bauteil ausgebildet sein, wobei sich die Förderrinne 36 in ihrer Längserstreckung von der linken Seite der Siebeinheit 30 bis hin zu der verstellbaren Fördereinheit 70 erstreckt. Wie die Darstellung gemäß Figur 2 weiter erkennen lässt, kann das Siebdeck 34 mittels einer Ableitfläche 35 verlängert sein. Dabei schließt sich die Ableitfläche 35 in Förderrichtung in Form einer absteigenden Stufe an das Siebdeck 34 an, damit in Förderrichtung keine Barriere entsteht.

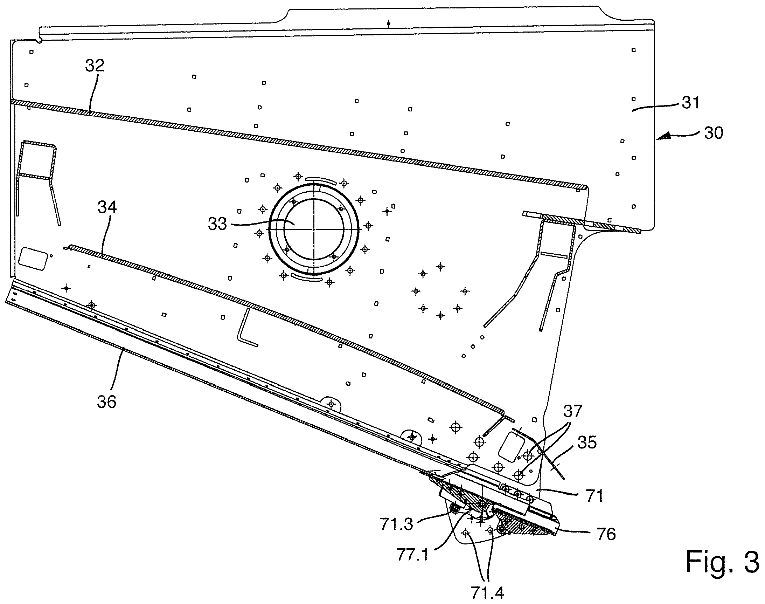

Die verstellbare Fördereinheit 70 besitzt eine Klappe 72 und ein Förderelement 76. Die Klappe 72 kann um eine Schwenkachse 74.1 verschwenkt werden. In Figur 2 ist eine Betriebsposition dargestellt, bei der die Klappe 72 in einer geschwenkten Förderposition steht. Dabei wird die, vom Siebdeck 34 ausgesiebte feine Teilfraktion mittels der Klappe 72 auf das Abführband 50 aufgegeben. Figur 3 zeigt eine weitere Betriebsstellung der Klappe 72. Dies stellt die Bypassposition dar. In dieser Stellposition wird das von der Förderrinne 36 kommende ausgesiebte feine Gesteinsmaterial über die Klappe 72 auf das Förderelement 76 geführt. Vom Förderelement 76 fällt das feine Gesteinsmaterial dann auf den Brecherabzugsförderer 60.

Wie die Figuren 2 und 3 weiter erkennen lassen, besitzen die Seitenwände 31 im Bereich der verstellbaren Fördereinheit 70 Schraubaufnahmen 37. Diese dienen zur Befestigung der verstellbaren Fördereinheit an den Seitenwänden 31. Damit ist die verstellbare Fördereinheit 70 an der Siebeinheit 30 befestigbar.

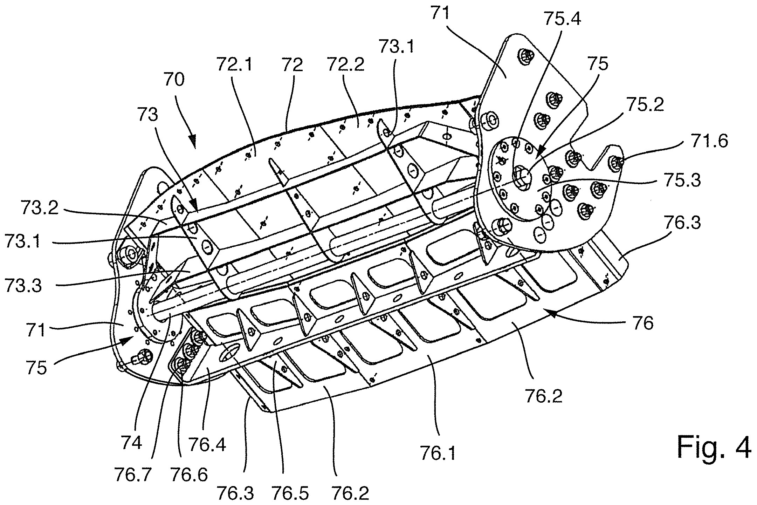

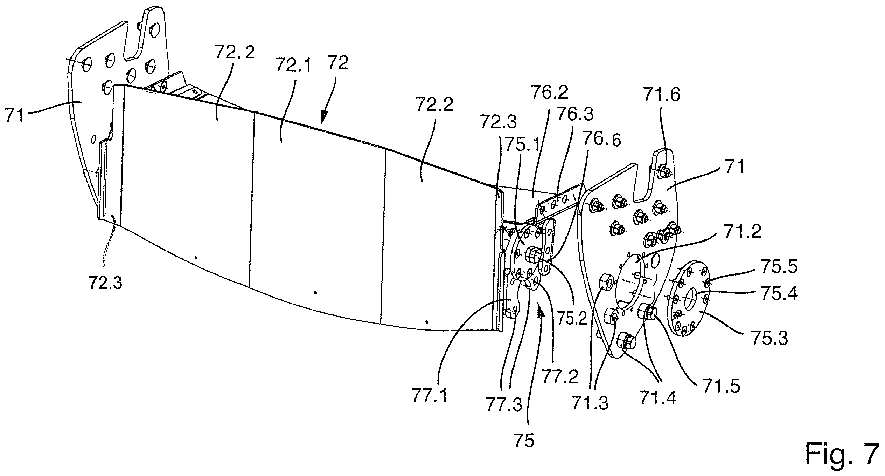

Aus den Darstellungen gemäß den Figuren 4 bis 7 ist der Aufbau der verstellbaren Fördereinheit 70 deutlicher erkennbar. Wie diese Zeichnungen zeigen, besitzt die verstellbare Fördereinheit 70 zwei Befestigungsabschnitte 71, die als Blechabschnitte ausgebildet sein können. Zwischen den beiden Befestigungsabschnitten 71 sind sowohl die Klappe 72 als auch das Förderelement 76 angeordnet. Die Klappe 72 wird von einem Blechabschnitt als Stanz-Biegeteil gebildet. Sie weist einen Mittenbereich 72.1 auf, an den sich beidseitig Abwinklungen 72.2 anschließen. Dem Mittenbereich 72.1 abgekehrt weisen die Abwinklungen 72.2 Abkantungen 72.3 auf. Über die seitlich angestellten Abwinklungen 72.2 und den Mittenbereich 72.1 wird die rinnenförmige Geometrie der Förderrinne 36 nachgebildet. Unterhalb der Klappe 72 ist eine Tragstruktur 73 angeordnet. Diese Tragstruktur 73 weist miteinander verbundene Längsstreben 73.1 und Querstreben 73.2, 73.3 auf. Mit der Tragstruktur 73 wird die Klappe 72 unterfangen, sodass eine stabile Leichtbauweise verwirklicht ist. Die Längsstreben 73.1 können Durchbrüche aufweisen, durch die ein Profilabschnitt 74 hindurchgeführt ist. Der Profilabschnitt 74 kann an den Längsstreben 73.1 fixiert, beispielsweise verschweißt sein. Der Profilabschnitt 74 bildet mit seiner Mittellängsachse die Schwenkachse und 74.1. An seinen längsseitigen Enden sind an den Profilabschnitt 74 Lagerabschnitte 75.1 eines Lagers 75 angebaut, wie dies Figur 7 erkennen lässt. Die Lagerabschnitte 75.1 können, wie gezeigt, von kreisförmigen Scheiben gebildet sein. Die Lagerabschnitte 75.1 sind auf die Enden des Profilabschnitts 74 aufgeschweißt oder daran in sonstiger Weise drehfest befestigt. Entweder an den Lagerabschnitten 75.1 oder der Tragstruktur 30 oder der Klappe 72 können Arretierabschnitte 77.1, 77.2 mit Arretieraufnahme 77.3 befestigt sein. Dabei sind die Arretierabschnitte 77.1, 77.2 drehfest mit der Klappe 72 verbunden. Die Zuordnung der Lagerabschnitte 75.1 zu den Befestigungsabschnitten 71 erfolgt über Lageraufnahmen 71.2, die beispielsweise, wie vorliegend in Form von kreisrunden Ausbrüchen aus den Befestigungsabschnitten 71 ausgenommen sind. Die Lagerabschnitte 75.1 können zur Bildung einer Drehlagerung in diese Lageraufnahmen 71.2 eingesetzt werden. Um eine axiale Verschiebung der Klappe 72 gegenüber den Befestigungsabschnitten 71 zu blockieren, sind Deckel 75.3 verwendet. Diese Deckel 75.3 weisen Befestigungsaufnahmen, beispielsweise in Form von Schraubaufnahmen auf. Durch die Schraubaufnahmen können Befestigungsschrauben hindurchgeführt und in fluchtende Gewindeaufnahmen des Befestigungsabschnittes 71 eingeschraubt werden. Wie Figur 7 erkennen lässt, weist der Deckel 75.3 einen Durchbruch 75.4 auf. Der Durchbruch 75.4 schafft Zugriff zu einem Betätigungselement 75.2, welches drehfest mit dem Lagerabschnitt 75.1 verbunden ist. Das Betätigungselement 75.2 kann beispielsweise von einem Sechskant gebildet sein. Durch den Durchbruch 75.4 kann mit einem Werkzeug auf das Betätigungselement 75.2 zugegriffen werden. Mit dem Werkzeug lässt sich das Betätigungselement 75.2 verstellen und mit ihm die Klappe 72, um diese zwischen der Bypassposition und der Förderstellung zu schwenken.

An den beiden Befestigungsabschnitten 71 ist auch das Förderelement 76 befestigt. Das Förderelement 76 ist wieder aus einem Blechabschnitt als Stanz-Biegeteil gefertigt. Es weist einen Mittenbereich 76.1 auf, an den sich seitlich Abwinklungen 76.2 anschließen. Dem Mittenbereich 76.1 abgekehrt sind von den Abwinklungen 76.2 Abkantungen 76.3 abgebogen. Die Abkantungen 76.3 weisen Befestigungsaufnahmen auf, wie Figur 7 erkennen lässt. Über geeignete Befestigungselemente, beispielsweise Schrauben kann das Förderelement 76 dann mit den Befestigungsabschnitten 71 verbunden werden. Mit dem Förderelement 76 werden mithin die beiden Befestigungsabschnitte 71 in dem gewünschten Abstand fixiert. Mit dem Mittenbereich 76.1 und den beiden Abwinklungen 76.2 bildet das Förderelement 76 die rinnenförmige Geometrie der Klappe 72 nach.

In Figur 4 ist der Aufbau des Förderelements 76 weiter verdeutlicht. Wie diese Darstellung zeigt, sind auf der Unterseite des Förderelements 76 Stützstreben 76.4 und Längsstreben 76.5 befestigt. Mit diesen Streben wird eine stabile Leichtbauweise für das Förderelement 76 garantiert. Die Stützstrebe 76.4 weist an ihren längsseitigen Enden abgewinkelte Befestigungsabschnitte 76.6 auf. Durch diese Befestigungsaufnahmen 76.6 können Schrauben 76.7 hindurchgesteckt werden, um die Stützstrebe 76.4 mit den Befestigungsabschnitten 71 zu verbinden. Dementsprechend dient dann die Stützstrebe 76.4 zum einen zum stabilen Unterfangen des Förderelements 76 und zum andern auch dazu, die Befestigungsabschnitte 71 zueinander im definierten Abstand zu halten. Die in den Figuren 4 bis 7 dargestellte verstellbare Fördereinheit 70 mit ihrer Klappe 72 und dem Förderelement 76 kann als vormontierte Baueinheit gefertigt werden. Sie lässt sich dann an der Siebeinheit 30 einfach montieren. Die Montage gelingt dabei einfach, wenn vorgesehen ist, dass die beiden Befestigungsabschnitte 71 mit den Seitenwänden 31 der Siebeinheit 30 verbunden werden. Zu diesem Zweck kann es vorgesehen sein, dass die Befestigungsabschnitte 71 Schraubaufnahmen aufweisen. Diese können in Flucht zu Schraubaufnahmen der Seitenwände 31 gestellt werden. Mittels Befestigungsschrauben 71.6, die dann durch die Schraubaufnahmen hindurchgeführt sind, lässt sich eine sichere und stabile Zuordnung der verstellbaren Fördereinheit 70 zur Siebeinheit 30 erreichen.

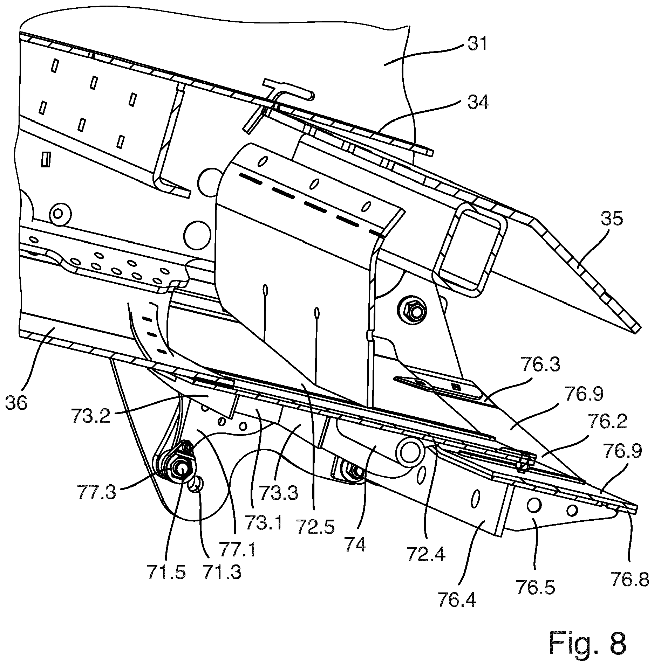

Figur 8 zeigt eine alternative Ausführungsform einer verstellbaren Fördereinheit 70. Dabei ist auf Blechabschnitte 72.4 bzw. 76.8 der Klappe 72 bzw. des Förderelements 76 jeweils ein Materialabschnitt 72.5 bzw. 76.9 aus biegeschlaffem Material, bspw. Gummi oder Kunststoff, gespannt. Dabei ist insbesondere vorgeschlagen, dass der Materialabschnitt 72.5 bzw. 76.9 nach Art einer Trommelbespannung quer zur Förderrichtung seitlich (bspw. im Bereich der Abkantungen 72.3 bzw. 76.3) eingespannt ist. Der Materialabschnitt 72.5 bzw. 76.9 ist dabei also von dem Blechabschnitt 72.4 bzw. 76.8 der Klappe 72 bzw. des Förderelements 76 unterfangen. Alternativ kann auch auf die Blechabschnitte 72.4 bzw. 76.8 verzichtet werden, so dass der Materialabschnitt 72.5 bzw. 76.9 unmittelbar auf der Tragstruktur 73; 73.1, 73.2, 73.3 bzw. 76.4, 76.5 aufliegt und von dieser unterfangen ist. Der Materialabschnitt 72.5 bzw. 76.9 aus biegeschlaffem Material kann während des Betriebs der Brechanlage 10 besonders gut in Schwingungen bzw. Vibrationen versetzt werden, um eine Verblockung von Fördergut auf der Klappe 72 und/oder dem Förderelement 76 wirksam verhindern zu können. In den Materialabschnitt 72.5 bzw. 76.9 aus biegeschlaffem Material oder auf den Materialabschnitt 72.5; 76.9 können Versteifungsstreben ein- bzw. angebracht sein, um trotz der biegeschlaffen Eigenschaften des Materialabschnitts die Klappe 72 bzw. das Förderelement 76 in einer der rinnenförmigen Geometrie der Förderrinne 36 entsprechenden Form zu halten.

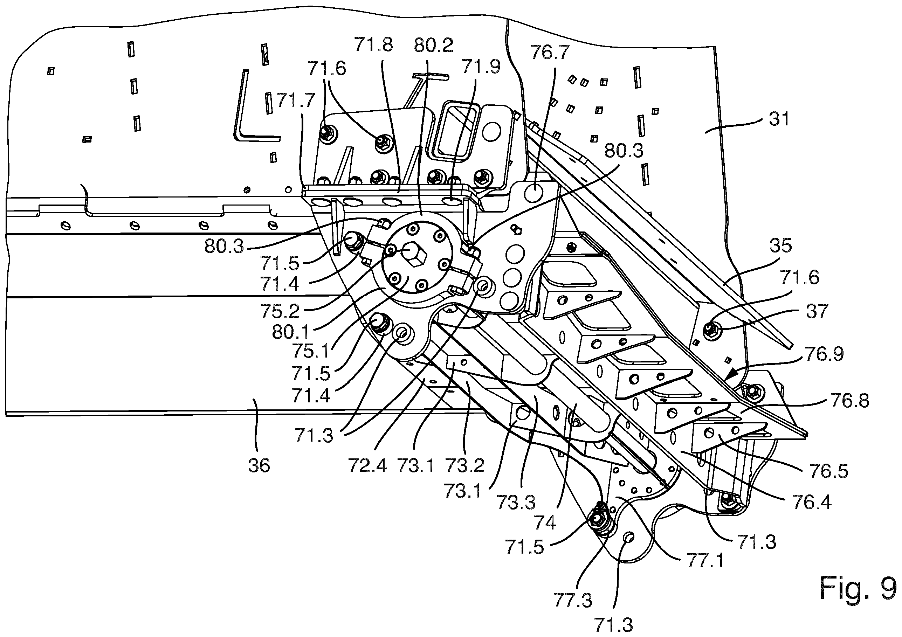

Bei der Ausführungsform aus Figur 9 ist die verstellbare Fördereinheit 70 an die Siebeinheit 30 angeflanscht. Zu diesem Zweck sind den Seitenwänden 31 der Siebeinheit 30 erste Flanschabschnitte 71.7 und den Befestigungsabschnitten 71 der Fördereinheit 70 zweite Flanschabschnitte 71.8 zugeordnet. Die ersten Flanschabschnitte 71.7 sind mittels Befestigungsschrauben 71.6 an den Seitenwänden 31 der Siebeinheit befestigt. Die zweiten Flanschabschnitte 71.8 sind Bestandteil der Befestigungsabschnitte 71 oder an diesen angeschweißt. Das Anflanschen der Fördereinheit 70 erlaubt eine besonders schnelle und einfache Befestigung der Fördereinheit 70 an der Siebeinheit 30. Dazu werden einfach die Flanschabschnitte 71.7, 71.8 relativ zueinander zur Anlage gebracht und aneinander befestigt. Zur Befestigung der Flanschabschnitte 71.7, 71.8 aneinander können beliebige lösbare Befestigungsmittel, bspw. Schrauben 71.9 und Muttern, verwendet werden. Die an die Siebeinheit 30 angeflanschte Fördereinheit 70 kann zudem besonders schnell und einfach ausgewechselt werden.

Im Folgenden wird nun die Funktionsweise der verstellbaren Fördereinheit näher erläutert. Figur 3 zeigt die Bypassposition, wie dies oben näher erläutert wurde. Dabei legt sich die Klappe 72 mit ihrer Oberseite an die Unterseite der Förderrinne 36 an. Aufgrund der abgewinkelten Geometrie der Klappe 72 bildet die Klappe 72 die gebogene Form der Förderrinne 36 nach. Auf diese Weise wird ein störungsfreier Materialtransport ermöglicht. Dieser wird auch dadurch unterstützt, dass sich die Klappe 72 an die Unterseite der Förderrinne 36 anlegt. Auf diese Weise wird in Förderrichtung eine absteigende Stufe gebildet.

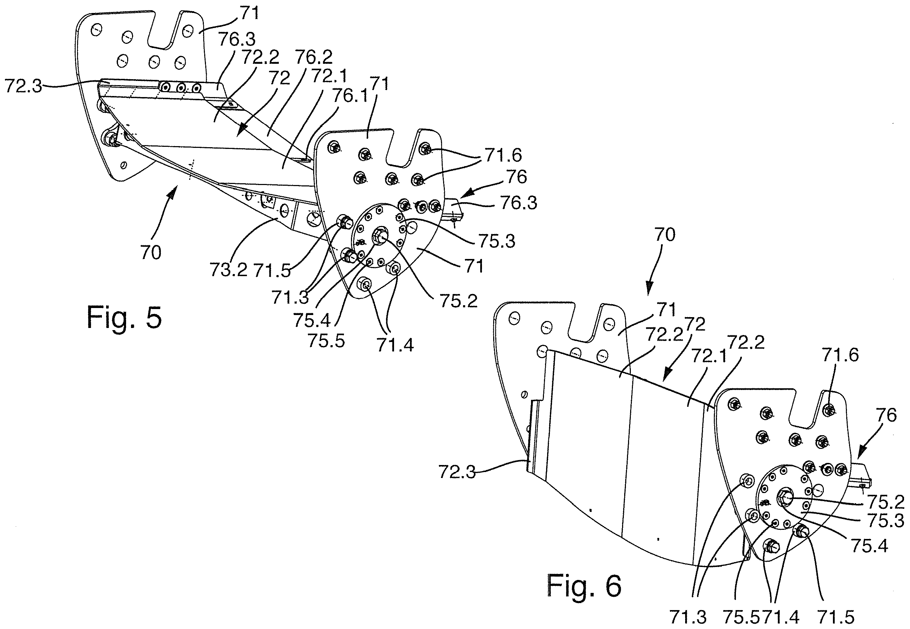

In der Bypassposition ist das der Förderrinne 36 abgewandte Ende der Klappe 72 über das Förderelement 76 gestellt, wie dies Figur 3 erkennen lässt. Auch hierdurch wird eine absteigende Stufe in Förderrichtung gebildet, sodass keine Verblockungen entstehen können. Wenn nun die Klappe 72 von der in Figur 3 gezeigten Bypassposition in die Förderstellung gedreht werden soll, so wird ein geeignetes Werkzeug mit dem Betätigungselement 75.2 in Eingriff gebracht. Die Klappe 72 kann dann gedreht werden, bis sie die in den Figuren 2 und 6 gezeigte Stellposition erreicht. Dann ist der Förderweg zwischen der Förderrinne 36 und dem Förderelement 76 unterbrochen. Der von der Förderrinne 36 kommende Materialstrom wird nun unmittelbar auf das Abführband 50 geleitet. Die Klappe 72 versperrt den Weg zwischen der Förderrinne 36 und dem Förderelement 76 und steht zu diesem Zweck auch nach oben ein Stück weit über diese Bauteile vor. Auf diese Weise ist sicher verhindert, dass Material in den Bereich des Brecherabzugsförderers 60 gelangen kann.

Um eine ungewünschte Verstellung der Klappe 72 in der jeweiligen Stellposition zu verhindern sind Positionierelemente 71.5 verwendet. Diese Positionierelemente 71.5 können mit den Arretieraufnahmen 77.3 in der jeweiligen Stellposition in Eingriff gebracht werden. Besonders bevorzugt kann es vorgesehen sein, dass die Positionierelemente 71.5 als Befestigungsschrauben ausgebildet sind, die durch Schraubaufnahmen 71.3, 71.4 der Befestigungsabschnitte 71 hindurchgesteckt und in die, als Gewindeaufnahmen ausgebildeten Arretieraufnahmen 77.3 eingeschraubt sind. Diese Befestigungsart hat sich aufgrund der starken Schwingungen der Siebeinheit 30 als besonders geeignet erwiesen. Insbesondere kann dazu vorgesehen sein, dass pro Einstellposition ein oder mehrere, vorzugsweise zwei Positionierelemente 71.5 die Zuordnung der Klappe 72 zu den Befestigungsabschnitten 71 sichern.

## Patentansprüche

1. Aufbereitungsanlage, insbesondere Brechanlage (10), insbesondere Gesteinsbrecher mit einer Befülleinheit (20), die mit dem zu brechenden Gut befüllbar ist,
wobei in Förderrichtung hinter der Befülleinheit (20) oder in der Befülleinheit (20) eine Siebeinheit (30) angeordnet ist,
wobei die Siebeinheit (30) mittels eines Schwingungserregers (38) in Schwingbewegung versetzbar ist,
wobei über die Siebeinheit (30) ein Teil des zugeführten Guts einer anschließenden Prozesseinheit, insbesondere einem Brechaggregat (40), zugeleitet und ein weiterer Teil in der Siebeinheit (30) ausgesiebt wird,
wobei der ausgesiebte Teil des Guts mittels einer verstellbaren Klappe (72) einer Fördereinheit (70) wahlweise in einer Bypassstellung an der anschließenden Prozesseinheit, insbesondere am Brechaggregat (40), vorbei einer Fördereinrichtung, insbesondere einem Brecherabzugsförderer (60), zugeleitet ist oder in einer Förderposition mittels einer Fördereinrichtung (50) aus dem Maschinen-Arbeitsbereich ausgefördert wird,
**dadurch gekennzeichnet,**
**dass** die Klappe (72) an der Siebeinheit (30) derart befestigt ist, dass sie gemeinsam mit der Siebeinheit (30) von dem Schwingungserreger (38) angeregt wird.

2. Aufbereitungsanlage nach Anspruch 1,
**dadurch gekennzeichnet,**
**dass** die verstellbare Fördereinheit (70) zwei zueinander beabstandete Befestigungsabschnitte (71) aufweist, zwischen denen die Klappe (72) schwenkbar gehalten ist, wobei die Befestigungsabschnitte (71) an der Siebeinheit (30) befestigt sind.

3. Aufbereitungsanlage nach Anspruch 2,
**dadurch gekennzeichnet,**
**dass** die Befestigungsabschnitte (71) an gegenüberliegenden Seitenwänden (31) der Siebeinheit (30) befestigt sind.

4. Aufbereitungsanlage nach Anspruch 3,
**dadurch gekennzeichnet,**
**dass** die Befestigungsabschnitte (71) mittels an den gegenüberliegenden Seitenwänden (31) der Siebeinheit (30) und den Befestigungsabschnitten (71) ausgebildeter Flanschabschnitte (71.7, 71.8) an der Siebeinheit (30) befestigt sind.

5. Aufbereitungsanlage nach einem der Ansprüche 2 bis 4,
**dadurch gekennzeichnet,**
**dass** die Befestigungsabschnitte (71) Lageraufnahmen (71.2) aufweisen, an denen die Klappe (72) mit Lagerabschnitten (75.1) gelagert ist,
und **dass** die Lagerabschnitte (75.1) an einem Profilabschnitt (74) angekoppelt sind, der unterhalb der Klappe (72) verläuft und mit dieser verbunden ist.

6. Aufbereitungsanlage nach einem der Ansprüche 1 bis 5,
**dadurch gekennzeichnet,**
**dass** die Klappe (72) einen Mittenbereich (72.1) aufweist, an den sich seitlich quer zur Fördereinrichtung beidseitig Abwinklungen (72.2) anschließen,
und **dass** die Siebeinheit (30) eine Förderrinne (36) aufweist, die von einem biegeschlaffen Bauteil, beispielsweise einem Gummiband, gebildet ist, an das die Klappe (72) mit ihrer Unterseite in der Bypassposition angelegt ist.

7. Aufbereitungsanlage nach einem der Ansprüche 1 bis 6,
**dadurch gekennzeichnet,**
**dass** die Klappe (72) mittels einer Tragstruktur (73) unterfangen ist, die von Längsstreben (73.1) und Querstreben (73.2, 73.3) gebildet ist.

8. Aufbereitungsanlage nach einem der Ansprüche 1 bis 7,
**dadurch gekennzeichnet,**
**dass** die verstellbare Fördereinrichtung (70) in Förderrichtung hinter der Klappe (72) ein Förderelement (76) aufweist, das in der Bypassstellung der Klappe (72) an den Förderbereich der Klappe (72) anschließt.

9. Aufbereitungsanlage nach Anspruch 8,
**dadurch gekennzeichnet,**
**dass** das Förderelement (76) an der Siebeinheit (30) derart befestigt ist, dass es gemeinsam mit der Siebeinheit (30) und der Klappe (72) von dem Schwingungserreger (38) angeregt wird.

10. Aufbereitungsanlage nach Anspruch 8 und 9, soweit abhängig von einem der Ansprüche 2 bis 7,
**dadurch gekennzeichnet,**
**dass** das Förderelement (76) an den beiden Befestigungsabschnitten (71) befestigt ist und diese zueinander beabstandet hält.

11. Aufbereitungsanlage nach einem der Ansprüche 8 bis 10,
**dadurch gekennzeichnet,**
**dass** das Förderelement (76) einen Förderabschnitt aufweist, der aus einem Blechabschnitt gefertigt ist und der an seiner Unterseite mittels einer Tragstruktur unterfangen ist, die eine oder mehrere Stützstreben (76.4) und/oder Längsstreben (76.5) umfasst.

12. Aufbereitungsanlage nach Anspruch 7 oder 11,
**dadurch gekennzeichnet,**
**dass** die Klappe (72) und/oder das Förderelement (76) einen Blechabschnitt (72.4; 76.8) aufweisen, der an seiner Unterseite durch die Tragstruktur (73; 73.1, 73.2, 73.3; 76.4, 76.5) unterfangen ist.

13. Aufbereitungsanlage nach Anspruch 7 oder 11,
**dadurch gekennzeichnet,**
**dass** die Klappe (72) und/oder das Förderelement (76) einen Materialabschnitt (72.5; 76.9) aus einem biegeschlaffen Material, insbesondere Gummi oder Kunststoff, aufweisen, der an seiner Unterseite durch die Tragstruktur (73; 73.1, 73.2, 73.3; 76.4, 76.5) unterfangen ist.

14. Aufbereitungsanlage nach Anspruch 12,
**dadurch gekennzeichnet,**
**dass** die Klappe (72) und/oder das Förderelement (76) einen Materialabschnitt (72.5; 76.9) aus einem biegeschlaffen Material, insbesondere Gummi oder Kunststoff, aufweisen, der an seiner Unterseite durch den Blechabschnitt (72.4; 76.8) unterfangen ist.

15. Aufbereitungsanlage nach einem der Ansprüche 1 bis 14,
**dadurch gekennzeichnet,**
**dass** an die Klappe (72) ein oder mehrere Arretierabschnitte (77.1, 77.2) mit wenigstens einer Arretieraufnahme (77.3) angekoppelt sind, die in der Bypassstellung und/oder der Förderposition an ortsfesten Befestigungselementen (71.3) festgelegbar sind.

## Claims

1. Processing plant, in particular crushing plant (10), in particular rock crusher with a filling unit (20) which can be filled with the material to be crushed,
wherein a screening unit (30) is arranged in the conveying direction downstream of the filling unit (20) or in the filling unit (20),
wherein the screening unit (30) can be set in oscillating motion by means of an oscillation exciter (38),
wherein a part of the fed material is fed via the screening unit (30) to a subsequent processing unit, in particular to a crushing unit (40), and a further part is screened out in the screening unit (30),
wherein the screened-out part of the material is fed by means of an adjustable flap (72) of a conveying unit (70) optionally in a bypass position past the subsequent processing unit, in particular the crushing unit (40), to a conveying device, in particular a crusher discharge conveyor (60), or in a conveying position is conveyed out of the machine working area by means of a conveying device (50),
**characterized in**
**that** the flap (72) is attached to the screen unit (30) in such a way that it is excited together with the screen unit (30) by the vibration exciter (38).

2. Processing plant according to claim 1,
**characterized in**
**in that** the adjustable conveyor unit (70) has two fastening sections (71) which are spaced apart from one another and between which the flap (72) is held pivotably, the fastening sections (71) being fastened to the screen unit (30).

3. Processing plant according to claim 2,
**characterized in**
**that** the fastening sections (71) are fastened to opposite side walls (31) of the screen unit (30).

4. Processing plant according to claim 3,
**characterized in**
**in that** the fastening sections (71) are fastened to the screening unit (30) by means of flange sections (71.7, 71.8) formed on the opposite side walls (31) of the screening unit (30) and the fastening sections (71).

5. Processing unit according to any one of claims 2 to 4,
**characterized in**
**in that** the fastening sections (71) have bearing receptacles (71.2) on which the flap (72) is mounted with bearing sections (75.1),
and **in that** the bearing sections (75.1) are coupled to a profile section (74) which extends below the flap (72) and is connected thereto.

6. Processing plant according to any one of claims 1 to 5,
**characterized in**
**in that** the flap (72) has a central region (72.1) which is adjoined laterally by angled portions (72.2) on both sides transversely to the conveying arrangement and **in that** the screening unit (30) has a conveying channel (36) which is formed by a flexible component, for example a rubber band, against which the flap (72) is placed with its underside in the bypass position.

7. Processing plant according to any one of claims 1 to 6,
**characterized in**
**that** the flap (72) is supported by means of a supporting structure (73) formed by longitudinal struts (73.1) and transverse struts (73.2, 73.3).

8. Processing plant according to any one of claims 1 to 7,
**characterized in**
**in that** the adjustable conveying device (70) has, downstream of the flap (72) in the conveying direction, a conveying element (76) which, in the bypass position of the flap (72), adjoins the conveying region of the flap (72).

9. Processing plant according to claim 8,
**characterized in**
**that** the conveying element (76) is attached to the screening unit (30) in such a way that it is excited together with the screening unit (30) and the flap (72) by the vibration exciter (38).

10. Processing plant according to claim 8 and 9, as far as depending on one of the claims 2 to 7,
**characterized in**
**that** the conveying element (76) is fixed to the two fixing sections (71) and keeps them spaced apart from each other.

11. Processing plant according to any one of claims 8 to 10,
**characterized in**
**that** the conveying element (76) comprises a conveying section which is made of a sheet metal section and which is underpinned on its underside by means of a supporting structure comprising one or more supporting struts (76.4) and/or longitudinal struts (76.5).

12. Processing plant according to claim 7 or 11,
**characterized in**
**that** the flap (72) and/or the conveying element (76) comprise a sheet metal section (72.4; 76.8) which is supported on its underside by the supporting structure (73; 73.1, 73.2, 73.3; 76.4, 76.5).

13. Processing plant according to claim 7 or 11,
**characterized in**
**in that** the flap (72) and/or the conveying element (76) have a material section (72.5; 76.9) made of a flexible material, in particular rubber or plastic, which is underpinned on its underside by the supporting structure (73; 73.1, 73.2, 73.3; 76.4, 76.5).

14. Processing plant according to claim 12,
**characterized in**
**in that** the flap (72) and/or the conveying element (76) have a material section (72.5; 76.9) made of a flexible material, in particular rubber or plastic, which is underpinned on its underside by the sheet-metal section (72.4; 76.8).

15. Processing plant according to any one of claims 1 to 14,
**characterized in**
**in that** one or more locking sections (77.1, 77.2) having at least one locking receptacle (77.3) are coupled to the flap (72), which locking sections (77.1, 77.2) can be secured to stationary fastening elements (71.3) in the bypass position and/or the conveying position.

## Revendications

1. Installation de transformation, en particulier installation de concassage (10), notamment concasseur de roches avec une unité de remplissage (20) pouvant être remplie avec le matériau à concasser
dans lequel une unité de criblage (30) est disposée en aval de l'unité de remplissage (20) ou dans l'unité de remplissage (20) dans le sens du transport,
dans lequel l'unité de criblage (30) peut être mise en mouvement oscillant au moyen d'un excitateur d'oscillations (38),
dans laquelle une partie du matériau alimenté est acheminée vers une unité de traitement ultérieure, en particulier une unité de broyage (40), via l'unité de criblage (30) et une autre partie est éliminée par criblage dans l'unité de criblage (30),
la partie criblée du matériau est amenée au moyen d'un clapet réglable (72) d'une unité de transport (70), au choix dans une position de dérivation devant l'unité de traitement en aval, en particulier l'unité de broyage (40), à un dispositif de transport, en particulier un convoyeur de décharge du broyeur (60), ou, dans une position de transport, est évacuée de la zone de travail de la machine au moyen d'un dispositif de transport (50),
caractérisé en
en ce que le clapet (72) est fixé à l'unité de criblage (30) de telle sorte qu'il est excité avec l'unité de criblage (30) par l'excitateur de vibrations (38).

2. Usine de transformation selon la revendication 1,
caractérisé en
en ce que l'unité de transport réglable (70) présente deux sections de fixation (71) qui sont espacées l'une de l'autre et entre lesquelles le volet (72) est maintenu de manière pivotante, les sections de fixation (71) étant fixées à l'unité de criblage (30).

3. Usine de transformation selon la revendication 2,
caractérisé en
que les sections de fixation (71) sont fixées aux parois latérales opposées (31) de l'unité d'écran (30).

4. Usine de transformation selon la revendication 3,
caractérisé en
en ce que les sections de fixation (71) sont fixées à l'unité de tamisage (30) au moyen de sections de bride (71.7, 71.8) formées sur les parois latérales opposées (31) de l'unité de tamisage (30) et des sections de fixation (71).

5. Usine de transformation selon l'une des demandes 2 à 4,
caractérisé en
en ce que les sections de fixation (71) comportent des logements de palier (71.2) sur lesquels le volet (72) est monté avec des sections de palier (75.1),
et en ce que les sections de palier (75.1) sont couplées à une section de profilé (74) qui s'étend sous le volet (72) et est reliée à celui-ci.

6. Usine de transformation selon l'une des revendications 1 à 5,
**caractérisé en ce que**
**en ce que** le clapet (72) présente une zone centrale (72.1) à laquelle se raccordent latéralement des deux côtés, transversalement au dispositif de transport, des parties coudées (72.2),
et **en ce que** l'unité de criblage (30) comporte un canal de transport (36) qui est formé par un élément flexible, par exemple une bande élastique, contre lequel le volet (72) est placé avec sa face inférieure en position de dérivation.

7. Usine de transformation selon l'une des revendications 1 à 6,
caractérisé en
que le volet (72) est étayé par une structure de support (73) formée par des entretoises longitudinales (73.1) et des entretoises transversales (73.2, 73.3).

8. Usine de transformation selon l'une des revendications 1 à 7,
caractérisé en
que le dispositif de transport réglable (70) présente, en aval du clapet (72) dans le sens du transport, un élément de transport (76) qui, dans la position de contournement du clapet (72), se raccorde à la zone de transport du clapet (72).

9. Usine de transformation selon la revendication 8,
caractérisé en
que l'élément de transport (76) est fixé à l'unité de criblage (30) de telle sorte qu'il est excité avec l'unité de criblage (30) et le clapet (72) par l'excitateur de vibrations (38).

10. Usine de transformation selon les demandes 8 et 9, pour autant qu'elle dépende d'une des demandes 2 à 7,
caractérisé en
que l'élément de transport (76) est fixé sur les deux parties de fixation (71) et les maintient espacées l'une de l'autre.

11. Usine de transformation selon l'une des revendications 8 à 10,
caractérisé en
que l'élément de transport (76) comprend une section de transport qui est constituée d'un profilé en tôle et qui est étayée sur sa face inférieure au moyen d'une structure de support comprenant une ou plusieurs entretoises de support (76.4) et/ou entretoises longitudinales (76.5).

12. Usine de transformation selon les revendications 7 ou 11,
caractérisé en
que le volet (72) et/ou l'élément de transport (76) sont constitués d'un profilé en tôle (72.4 ; 76.8) qui est soutenu sur sa face inférieure par la structure de support (73 ; 73.1, 73.2, 73.3 ; 76.4, 76.5).

13. Usine de transformation selon les revendications 7 ou 11,
caractérisé en
en ce que le clapet (72) et/ou l'élément de transport (76) présentent une partie matérielle (72.5 ; 76.9) en un matériau souple, notamment en caoutchouc ou en matière plastique, qui est soutenue sur sa face inférieure par la structure porteuse (73 ; 73.1, 73.2, 73.3 ; 76.4, 76.5).

14. Usine de transformation selon la revendication 12,
caractérisé en
en ce que le clapet (72) et/ou l'élément de transport (76) présentent une partie matérielle (72.5 ; 76.9) en un matériau souple, notamment en caoutchouc ou en plastique, qui est soutenue sur sa face inférieure par la partie en tôle (72.4 ; 76.8).

15. Usine de transformation selon l'une des revendications 1 à 14,
caractérisé en
en ce qu'une ou plusieurs sections de verrouillage (77.1, 77.2) présentant au moins un réceptacle de verrouillage (77.3) sont couplées au volet (72), lesquelles sections de verrouillage (77.1, 77.2) peuvent être fixées de manière fixe à des éléments de fixation fixes (71.3) dans la position de contournement et/ou la position de transport.
